# EUROPÄISCHE PATENTANMELDUNG

(11) **EP 3 770 713 A1**
(43) Veröffentlichungstag der Anmeldung: **27.01.2021**
(21) Anmeldenummer: 19188107.7
(22) Anmeldetag: 24.07.2019
(51) Int. Cl.: G05D 1/02, G08G 1/00

(54) **PERSONENTRANSPORTSYSTEM UND VERFAHREN ZUM BETREIBEN EINES PERSONENTRANSPORTSYSTEMS**

(71) Anmelder: Inventio AG, 6052 Hergiswil (CH)
(72) Erfinder: STUDER, Christian, 6010 Kriens (CH); OLCZYK, Eliza, 6003 Luzern (CH); KUSSEROW, Martin, 6005 Luzern (CH)

(57) **Zusammenfassung**

Die Erfindung betrifft ein Personentransportsystem und ein Verfahren zum Betreiben eines Personentransportsystems.

Das erfindungsgemässe Personentransportsystem (10) verfügt über mehrere Personentransportfahrzeuge (12, 14) und eine zentrale Steuerungseinrichtung (18). Die Personentransportfahrzeuge (12, 14) sind dazu vorgesehen, kontrolliert durch die zentrale Steuerungseinrichtung (18) auf von unterschiedlichen Arten von Verkehrsteilnehmern genutzten Transportwegen (16) autonom zu fahren. Erfindungsgemäss ist die zentrale Steuerungseinrichtung (18) dazu vorgesehen, ein erstes Personentransportfahrzeug (12), welches auf einer Fahrt von einem ersten Startort (S1) zu einem ersten Zielort (Z1) ein Hindernis (H) passieren muss, so zu kontrollieren, dass das erste Personentransportfahrzeug (12) das Hindernis (H) dann erreicht, wenn das Hindernis (H) für das erste Transportfahrzeug (12) passierbar ist, sich also für das erste Personentransportfahrzeug (12) in einem Passier-Zustand befindet.

## Beschreibung

Die Erfindung betrifft ein Personentransportsystem gemäss dem Oberbegriff des Anspruchs 1 und ein Verfahren zum Betreiben eines Personentransportsystems gemäss dem Oberbegriff des Anspruchs 11.

Aus Umweltschutzgründen und um Staus zu vermeiden wird zunehmend versucht, den Autoverkehr, insbesondere in Städten, durch öffentlichen Nahverkehr, beispielsweise mit Zügen oder Bussen zu ersetzen. Damit dies gelingen kann, muss die Nutzung des öffentlichen Nahverkehrs für die Passagiere komfortabel sein und insbesondere das so genannte "Letzte Meile Problem", also das Zurücklegen des Wegs zwischen einer Haltestelle des öffentlichen Nahverkehrs und dem eigentlichen Ziel des jeweiligen Passagiers, komfortabel gelöst werden. Zur Lösung des "Letzte Meile Problems" können autonom fahrende Personentransportfahrzeuge eingesetzt werden, die beispielsweise für den Transport von Passagieren an einem Bahnhof bereitstehen und nach Abschluss einer Fahrt wieder zum Bahnhof zurückkehren können. Derartige Personentransportfahrzeuge können beispielsweise auch eingesetzt werden, um Personen von einem Parkplatz für Kraftfahrzeuge zu ihrem jeweiligen Ziel, beispielsweise eine Abfertigungshalle eines Flughafens zu transportieren.

Die EP 3388988 A1 beschreibt ein Personentransportsystem mit mehreren Personentransportfahrzeugen und einer zentralen Steuerungseinrichtung. Die Personentransportfahrzeuge sind dazu vorgesehen, kontrolliert durch die zentrale Steuerungseinrichtung auf von unterschiedlichen Arten von Verkehrsteilnehmern genutzten Transportwegen autonom zu fahren.

Demgegenüber ist es insbesondere die Aufgabe der Erfindung, ein Personentransportsystem und ein Verfahren zum Betreiben eines Personentransportsystems vorzuschlagen, welche einen für die transportierten Personen besonders zufriedenstellenden Transport ermöglichen. Erfindungsgemäss wird diese Aufgabe mit einem Personentransportsystem mit den Merkmalen des Anspruchs 1 und einem Verfahren zum Betreiben eines Personentransportsystems mit den Merkmalen des Anspruchs 11 gelöst.

Das erfindungsgemässe Personentransportsystem verfügt über mehrere Personentransportfahrzeuge und eine zentrale Steuerungseinrichtung. Die Personentransportfahrzeuge sind dazu vorgesehen, kontrolliert durch die zentrale Steuerungseinrichtung auf von unterschiedlichen Arten von Verkehrsteilnehmern genutzten Transportwegen autonom zu fahren. Erfindungsgemäss ist die zentrale Steuerungseinrichtung dazu vorgesehen, ein erstes Personentransportfahrzeug, welches auf einer Fahrt von einem ersten Startort zu einem ersten Zielort ein Hindernis passieren muss, so zu kontrollieren, dass das erste Personentransportfahrzeug das Hindernis dann erreicht, wenn das Hindernis für das erste Transportfahrzeug passierbar ist, sich also für das erste Personentransportfahrzeug in einem Passier-Zustand befindet. Das Hindernis ist dabei insbesondere kein Bestandteil des erfindungsgemässen Personentransportsystems.

Das erste Personentransportfahrzug muss damit nicht vor dem Hindernis warten, bis es das Hindernis passieren kann, sondern kann das Hindernis ohne anzuhalten passieren. Ein Warten vor einem Hindernis wäre für einen Passagier des ersten Personentransportfahrzeugs unangenehm, so dass er mit dem Transport durch das erste Personentransportfahrzeug unzufrieden wäre. Das ungehinderte Passieren des Hindernisses führt dagegen zu einem positiven und zufriedenen Eindruck beim Passagier des ersten Personentransportfahrzeugs.

Unter "dafür vorgesehen" soll hier verstanden werden, dass die entsprechende Komponente geeignet und konfiguriert, beispielsweise programmiert ist, eine bestimmte Aufgabe, wie beispielsweise das Transportieren eines Passagiers oder das Kontrollieren eines Personentransportfahrzeugs zu erledigen.

Die genannte Aufgabe wird auch von einem Verfahren zum Betreiben eines Personentransportsystems mit mehreren Personentransportfahrzeugen und einer zentralen Steuerungseinrichtung gelöst, bei welchem die Personentransportfahrzeuge kontrolliert durch die zentrale Steuerungseinrichtung auf von unterschiedlichen Arten von Verkehrsteilnehmern genutzten Transportwegen autonom fahren. Erfindungsgemäss kontrolliert die zentrale Steuerungseinrichtung ein erstes Personentransportfahrzeug, welches auf einer Fahrt von einem ersten Startort zu einem ersten Zielort ein Hindernis passieren muss, so, dass das erste Personentransportfahrzeug das Hindernis dann erreicht, wenn das Hindernis für das erste Transportfahrzeug in einem Passier-Zustand und damit für das erste Personentransportfahrzeug passierbar ist.

Die Personentransportfahrzeuge des Personentransportsystems fahren autonom, also ohne Steuerung durch einen Passagier bzw. Fahrer auf Transportwegen. Sie verfügen dazu über geeignete Sensoren, wie beispielsweise Kameras, Radarsensoren, Abstandssensoren, um einerseits den Verlauf der Transportwege und andererseits Behinderungen, wie Gegenstände auf dem Transportweg, andere Verkehrsteilnehmer oder zu passierende Hindernisse erkennen zu können. Sie weisen dazu jeweils auch eine Steuerungseinrichtung auf, welche die erfassten Sensordaten auswertet und einen Antrieb des entsprechenden Personentransportfahrzeugs ansteuert. Die Steuerungseinrichtung kann insbesondere ein Navigationsmodul, ein Routenfindungsmodul, ein Umfelderkennungsmodul oder dergleichen umfassen. Die Personentransportfahrzeuge können damit autonom zu einem Startort und einem Zielort fahren. Derartige Personentransportfahrzeuge können auch als fahrerlose Transportfahrzeuge (englisch Automated Guided Vehicles / AGVs) bezeichnet.

Die einzelnen Personentransportfahrzeuge fahren insbesondere unabhängig voneinander. Es ist aber auch möglich, dass mehrere Personentransportfahrzeuge zumindest temporär zu einer Gruppe zusammengeschlossen werden.

Die Personentransportfahrzeuge können insbesondere nur einen Passagier transportieren. Es ist aber auch möglich, dass sie mehrere Passagiere, beispielsweise 2, 4 oder 6 Passagiere gleichzeitig transportieren können. Die Personentransportfahrzeuge werden insbesondere elektrisch und damit emissionsfrei angetrieben.

Die Personentransportfahrzeuge verfahren kontrolliert durch die zentrale Steuerungseinrichtung. Die zentrale Steuerungseinrichtung sendet dazu Anweisungen, wie beispielsweise die Anweisung an das erste Personentransportfahrzeug, an den ersten Startort zu fahren. Sie empfängt insbesondere auch Informationen, wie beispielsweise einen Ladezustand einer Batterie von den Personentransportfahrzeugen. Ausserdem benötigt die zentrale Steuerungseinrichtung Informationen über den aktuellen Standort der Personentransportfahrzeuge. Die Personentransportfahrzeuge können dazu beispielsweise ihren Standort an die zentrale Steuerungseinrichtung übermitteln. Es ist beispielsweise auch möglich, dass die Personentransportfahrzeuge von einem Ortungssystem geortet werden und die zentrale Steuerungseinrichtung die Informationen über den Standort vom genannten Ortungssystem erhält. Für den Informationsaustausch steht die zentrale Steuerungseinrichtung mit den Personentransportfahrzeugen, insbesondere deren Steuerungseinrichtung in Kommunikationsverbindung, insbesondere über das Internet.

Die zentrale Steuerungseinrichtung ist insbesondere dazu vorgesehen, das erste Personentransportfahrzeug zu kontrollieren, indem sie dem ersten Personentransportfahrzeug eine Fahrtroute und eine Soll-Geschwindigkeit entlang der Fahrtroute vorgibt. Das erste Personentransportfahrzeug folgt dann soweit möglich der vorgegebenen Fahrroute mit der vorgegebenen Soll-Geschwindigkeit. Die Soll-Geschwindigkeit ist insbesondere nicht konstant, sondern ändert sich entlang der Fahrtroute. Wenn dies beispielsweise auf Grund von anderen Verkehrsteilnehmern oder Behinderungen auf dem Transportweg nicht möglich ist, meldet das erste Personentransportfahrzeug dies an die zentrale Steuerungseinrichtung zurück, woraufhin diese die Fahrtroute und die Soll-Geschwindigkeit anpassen kann. Damit kann gewähreistet werden, dass das erste Transportfahrzeug zu einem von der zentralen Steuerungseinrichtung gewünschten Zeitpunkt das Hindernis erreicht.

Analog können weitere Personentransportfahrzeuge des Personentransportsystems von der zentralen Steuerungseinrichtung kontrolliert werden.

Eine andere Möglichkeit der Kontrolle der Personentransportfahrzeuge durch die zentrale Steuerungseinrichtung kann so realisiert sein, dass die zentrale Steuerungseinrichtung dem ersten Personentransportfahrzeug eine Ankunftszeit am Hindernis und optional zusätzlich eine Ankunftszeit an einer Zwischenstation oder insbesondere mehrerer Zwischenstationen vorgibt. Das erste Personentransportfahrzeug sucht sich dann selbst die notwendige Fahrtroute und legt die notwendige Geschwindigkeit fest, um zum gewünschten Zeitpunkt an einer Zwischenstation oder dem Hindernis anzukommen. Das Einfügen von Zwischenstationen kann vorteilhaft sein, um die Planung der Fahrt in kürzere und damit einfacher planbare Abschnitte zu unterteilen.

Es ist nicht notwendig, dass an einer Zwischenstation auch ein Zwischen-Stopp eingelegt wird. Falls doch ein Zwischen-Stopp notwendig ist, kann die zentrale Steuerungseinrichtung dem ersten Personentransportfahrzeug insbesondere einen Zeitpunkt für die Weiterfahrt vorgeben.

Analog können weitere Personentransportfahrzeuge des Personentransportsystems von der zentralen Steuerungseinrichtung kontrolliert werden.

Die einzelnen Personentransportfahrzeuge können auf festen Routen verkehren, also zwischen festgelegten Startorten und Zielorten. Sie können insbesondere an ihrem jeweiligen Startort auf einen Passagier warten und diesen zum festgelegten Zielort bringen. Der Passagier kann die Fahrt beispielsweise über einen Knopf am Personentransportfahrzeug oder über eine App auf einem mobilen Endgerät, beispielsweise einem Smartphone, das mit der zentralen Steuerungseinrichtung kommuniziert, starten. Nach Erreichen des Zielorts kann das jeweilige Personentransportfahrzeug wieder auf einen Passagier warten, der Zielort kann also zu einem Startort werden. Alternativ dazu kann das Personentransportfahrzeug nach Erreichen des Zielorts wieder zum ursprünglichen Startort zurückkehren oder zu einem anderen Startort fahren.

Es ist auch möglich, dass die Passagiere ein Personentransportfahrzeug beispielsweise über eine App auf einem mobilen Endgerät anfordern und ausserdem den Zielort in der App festlegen können. Die zentrale Steuerungseinrichtung sorgt dann dafür, dass ein Personentransportfahrzeug zum jeweiligen Passagier, also zu einem Startort fährt und den Passagier zum gewünschten Zielort bringt.

Die von den Personentransportfahrzeuges befahrenen Transportwege werden von unterschiedlichen Arten von Verkehrsteilnehmern genutzt. Sie sind also nicht exklusiv für die Personentransportfahrzeuge des Personentransportfahrzeugs reserviert. Bei den anderen Arten von Verkehrsteilnehmern handelt es sich beispielsweise um Fussgänger, Fahrradfahrer, Rollerfahrer, Autofahrer, etc. Die Transportwege sind insbesondere als öffentliche Strassen, Fahrradwege oder Gehwege ausgeführt. Die Personentransportfahrzeuge des Personentransportsystems sind dabei ebenfalls Verkehrsteilnehmer.

Das vom ersten Personentransportfahrzeug auf der Fahrt vom ersten Startort zum ersten Zielort zu passierende Hindernis kann beispielsweise als eine Engstelle des Transportwegs, eine Kreuzung, eine Strassenüberquerung oder ein mit einem Aufzug zu überwindender Höhenunterschied ausgeführt sein. Unter einem Hindernis soll in diesem Zusammenhang eine Stelle des Transportwegs verstanden werden, die vom Personentransportfahrzeug nicht ohne weiteres passiert werden kann. Beim Passieren eines Hindernisses muss entweder auf andere Verkehrsteilnehmer geachtet werden oder es muss ein Hilfsmittel zum Passieren des Hindernisses verwendet werden. Ein derartiges Hilfsmittel kann beispielsweise eine Ampel oder ein Aufzug sein. Das erste Personentransportfahrzeug kann auf der Fahrt vom ersten Startort zum ersten Zielort auch mehr als ein Hindernis passieren. Die Ausprägung des Passier-Zustands für ein Personentransportfahrzeug eines Hindernisses ist von der Art des Hindernisses abhängig. Eine Engstelle ist im Passier-Zustand für das erste Personentransportfahrzeug, wenn ausser dem ersten Personentransportfahrzeug keine weiteren Personentransportfahrzeugen die Engstelle passieren wollen und sie sonst nicht anderweitig blockiert ist. Eine Kreuzung ist im Passier-Zustand für das erste Personentransportfahrzeug, wenn kein anderer Verkehrsteilnehmer die Kreuzung überqueren möchte oder alle anderen Verkehrsteilnehmer an der Kreuzung warten. Eine Kreuzung mit einer Ampel ist dann im Passier-Zustand für das erste Personentransportfahrzeug, wenn die Ampel dem ersten Personentransportfahrzeug die Durchfahrt erlaubt, also insbesondere grün ist. Eine mit einem Aufzug zu überwindende Höhendifferenz ist dann in einem Passier-Zustand für das erste Personentransportfahrzeug, wenn der Aufzug für das erste Personentransportfahrzeug bereitsteht.

Ein Hindernis kann neben dem Passier-Zustand für das erste Personentransportfahrzeug zumindest einen so genannten Sperr-Zustand für das erste Personentransportfahrzeug aufweisen, in dem das Passieren des Hindernisses durch das erste Personentransportfahrzeug nicht möglich ist. Die Kontrolle der Personentransportfahrzeuge durch die zentrale Steuerungseinrichtung erfolgt insbesondere in Abhängigkeit der genannten Zustände des Hindernisses.

In Ausgestaltung der Erfindung ist die zentrale Steuerungseinrichtung dazu vorgesehen, das erste Personentransportfahrzeug so zu kontrollieren, dass es das Hindernis ohne anzuhalten, also zwischenstoppfrei erreicht. Ein Passagier möchte immer möglichst schnell seinen Zielort erreichen. Daher ist es für einen Passagier immer unbefriedigend, wenn er einen Zwischenstopp einlegen muss. Eine Fahrt ohne einen Zwischenstopp führt damit zu einem besonders zufriedenen Eindruck des Passagiers.

Eine Fahrt des ersten Personentransportfahrzeugs ohne anzuhalten kann beispielsweise erreicht werden, indem die Geschwindigkeit des ersten Personentransportfahrzeug auf dem Weg zum Hindernis angepasst wird, also höher oder geringer ist als eine normale Geschwindigkeit des ersten Personentransportfahrzeugs. Eine andere Möglichkeit besteht darin, dass der Weg des ersten Personentransportfahrzeugs zum Hindernis entsprechend gewählt wird. Dazu kann beispielsweise ein besonders kurzer oder auch ein etwas längerer Weg gewählt werden, um zum gewünschten Zeitpunkt am Hindernis anzukommen.

In Ausgestaltung der Erfindung kann das Hindernis neben dem Passier-Zustand für das erste Personentransportfahrzeug einen Sperr-Zustand für das erste Personentransportfahrzeug einnehmen, in welchem es vom ersten Personentransportfahrzeug nicht passiert werden kann. Die zentrale Steuerungseinrichtung ist dann dazu vorgesehen, eine Zustandsfolge des Hindernisses zu ermitteln und das erste Personentransportfahrzeug in Abhängigkeit der genannten Zustandsfolge zu kontrollieren. Dies ermöglicht eine besonders effektive Kontrolle des ersten Personentransportfahrzeugs.

Unter einer Zustandsfolge soll hier eine Reihenfolge bzw. zeitliche Abfolge des Passier-Zustands für das erste Personentransportfahrzeug und des Sperr-Zustands für das erste Personentransportfahrzeug verstanden werden.

Wenn mehrere Personentransportfahrzeuge gleichzeitig kontrolliert werden, kann es dazu kommen, dass nicht nur das erste Personentransportfahrzeug das Hindernis passieren muss, sondern ausserdem noch weitere Personentransportfahrzeuge. Da alle Personentransportfahrzeuge von der zentralen Steuerungseinrichtung kontrolliert werden, ergibt sich eine Reihenfolge, in der die einzelnen Personentransportfahrzeuge das Hindernis passieren sollen. Ausserdem kann das Hindernis einen Zustand einnehmen, in dem es von keinem Personentransportfahrzeug passiert werden kann. Dieser Zustand und insbesondere auch das Auftreten dieses Zustands in der Zukunft kann der zentralen Steuerungseinrichtung von einer anderen Steuerungseinrichtung übermittelt werden. Das Empfangen dieser Information kann auch als eine Ermittlung einer Zustandsfolge angesehen werden.

Bei der beschriebenen Ausgestaltung der Erfindung wird die Kenntnis der Zustandsfolge bei der Kontrolle des ersten Personentransportfahrzeugs von der zentralen Steuerungseinrichtung verwendet. Das erste Personentransportfahrzeug wird also so kontrolliert, dass es am Hindernis ankommt, wenn dieses gemäss der ermittelten Zustandsfolge im Passier-Zustand für das erste Personentransportfahrzeug ist. Beispielsweise die Geschwindigkeit auf dem Weg des ersten Personentransportfahrzeugs zum Hindernis entsprechend langsamer vorgegeben, wenn bereits bekannt ist, dass das Hindernis für das erste Personentransportfahrzeug noch nicht passierbar ist. Damit wird vorteilhafterweise eine gleichmässigere Fahrt des ersten Personentransportfahrzeugs erreichet. Somit wird häufiges Beschleunigen und Verzögern der des ersten Personentransportfahrzeugs vermieden, was einen hohen Fahrkomfort für den Passagier und einen geringen Energieverbrauch ermöglicht.

In Ausgestaltung der Erfindung weist das Hindernis ein Hilfsmittel zum Passieren des Hindernisses auf, welches von einer dezentralen Steuerungseinrichtung angesteuert. Die dezentrale Steuerungseinrichtung ist dazu vorgesehen, eine Zustandsfolge des Hindernisses zu bestimmen und die Zustandsfolge an die zentrale Steuerungseinrichtung zu übermitteln. Damit kann die Zustandsfolge sehr genau bestimmt werden, was eine besonders gute Kontrolle der Personentransportfahrzeuge durch die zentrale Steuerungseinrichtung ermöglicht.

Unter einem Hilfsmittel zum Passieren eines Hindernisses soll eine Einrichtung verstanden werden, die ein Passieren eines Hindernisses ermöglicht, freigibt oder zumindest erleichtert. Beispielsweise ist eine Ampel ein Hilfsmittel zum Passieren einer Kreuzung. Ein Aufzug mit einer Aufzugkabine ist beispielsweise ein Hilfsmittel zur Überwindung einer Höhendifferenz, beispielsweise von einem Stockwerk in einem Gebäude in ein anderes Stockwerk. Neben diesen beiden Beispielen gibt es viele weitere Hilfsmittel zum Passieren eines Hindernisses, die hier nicht alle aufgezählt werden.

Ein derartiges Hilfsmittel wird von einer dezentralen Steuerungseinrichtung angesteuert, also beispielsweise im Falle einer Ampel von einer Ampelsteuerung oder im Falle eines Aufzugs von einer Aufzugsteuerung. Die dezentrale Steuerungseinrichtung plant den Zustand des Hilfsmittels und damit den Zustand des zugehörigen Hindernisses für eine gewisse Zeitspanne voraus. Sie bestimmt damit eine Zustandsfolge des Hindernisses und übermittelt diese an die zentrale Steuerungseinrichtung. Die zentrale Steuerungseinrichtung kontrolliert dann in Abhängigkeit von der von der dezentralen Steuerungseinrichtung empfangenen Zustandsfolge des Hindernisses das erste Personentransportfahrzeug.

In Ausgestaltung der Erfindung ist die zentrale Steuerungseinrichtung dazu vorgesehen, eine Anforderung an das Hilfsmittel zum Passieren des Hindernisses durch das erste Personentransportfahrzeug an die dezentrale Steuerungseinrichtung des Hilfsmittels zu übermitteln. Die dezentrale Steuerungseinrichtung ist dann dazu vorgesehen, die genannte Zustandsfolge des Hindernisses in Abhängigkeit der genannten Anforderung zu bestimmen. Damit kann die zentrale Steuerungseinrichtung vorteilhafterweise den Zustand des Hindernisses so beeinflussen, dass es für das Passieren des ersten Personentransportfahrzeugs zu einem passenden Zeitpunkt im Passier-Zustand für das erste Personentransportfahrzeug ist.

Die zentrale Steuerungseinrichtung kann beispielsweise eine Anforderung an eine als Aufzugsteuerung ausgeführtes Hilfsmittel senden, dass die Aufzugkabine des Aufzugs zu einem bestimmten Zeitpunkt auf einem vorgegebenen Stockwerk für das erste Personentransportfahrzeug insbesondere mit offener Kabinentür bereitstehen soll. Die Aufzugsteuerung versucht dann die Zustandsfolge des Aufzugs so festzulegen, dass diesem Wunsch entsprochen wird und übermittelt die so festgelegte Zustandsfolge an die zentrale Steuerungseinrichtung. Kann die Anforderung nicht exakt umgesetzt werden und die Aufzugkabine steht erst 10 Sekunden nach dem gewünschten Zeitpunkt für das erste Personentransportfahrzeug zur Verfügung, so wird diese Information in Form einer entsprechenden Zustandsfolge an die zentrale Steuerungseinrichtung übermittelt, welche das erste Personentransportfahrzeug dann so kontrolliert, dass es dann an der Aufzugkabine ankommt, wenn diese für das erste Personentransportfahrzeug bereitsteht. Das erste Personentransportfahrzeug kann in dem genannten Beispiel beispielsweise so kontrolliert werden, dass es später startet und/oder langsamer fährt als es könnte.

In Ausgestaltung der Erfindung ist die zentrale Steuerungseinrichtung dazu vorgesehen, ein zweites Personentransportfahrzeug, welches auf einer Fahrt von einem zweiten Startort zu einem zweiten Zielort das genannte Hindernis passieren muss, so zu kontrollieren, dass das erste Personentransportfahrzeug und das zweite Personentransportfahrzeug das Hindernis dann erreichen, wenn das Hindernis für das erste Personentransportfahrzeug und das zweite Personentransportfahrzeug in einem Passier-Zustand für das jeweilige Personentransportfahrzeug und damit passierbar ist. Damit kann nicht nur mit dem ersten Transportfahrzeug, sondern auch mit dem zweiten Transportfahrzeug ein besonders zufriedenstellender Transport von Passagieren realisiert werden. Insbesondere werden alle Personentransportfahrzeuge des Personentransportsystems wie die genannten ersten und zweiten Personentransportfahrzeuge von der zentralen Steuerungseinrichtung kontrolliert.

In Ausgestaltung der Erfindung bilden wenigstens zwei Personentransportfahrzeuge zumindest zeitweise eine Gruppe. Die zentrale Steuerungseinrichtung ist dann dazu vorgesehen, die Personentransportfahrzeuge der genannten Gruppe so zu kontrollieren, dass alle Personentransportfahrzeuge der Gruppe das Hindernis als Gruppe passieren. Damit kann die Gruppe der Personentransportfahrzeuge beim Passieren des Hindernisses zusammenbleiben und auch nach dem Hindernis weiterhin als Gruppe fahren, ohne dass Personentransportfahrzeuge aufeinander warten müssten. Damit ist die Kontrolle der Gruppe besonders einfach und es ist für alle Passagiere der genannten Gruppe der Personentransportfahrzeuge eine besonders zufriedenstellende Fahrt realisierbar.

In Ausgestaltung der Erfindung ist die zentrale Steuerungseinrichtung dazu vorgesehen, die Personentransportfahrzeuge der Gruppe so zu kontrollieren, dass sie eine Normal-Anordnung einnehmen, wenn sie unbeeinflusst von einem Hindernis sind und eine von der Normal-Anordnung abweichende Anordnung einnehmen, wenn sie von einem Hindernis beeinflusst sind. Damit kann vorteilhaft immer eine für die aktuelle Situation passende Anordnung der Personentransportfahrzeuge gewählt werden.

Die Personentransportfahrzeuge sind von einem Hindernis unbeeinflusst, wenn sie sich nicht auf das Passieren des Hindernisses vorbereiten müssen oder nach dem Passieren des Hindernisses bereits wieder in die Normal-Anordnung angenommen haben. Sie sind dagegen von einem Hindernis beeinflusst, wenn sie sich auf das Passieren des Hindernisses vorbereiten, das Hindernis passieren oder nach dem Passieren des Hindernisses dabei sind, wieder die Normal-Anordnung anzunehmen. Die Normal-Anordnung und die davon abweichende Anordnung unterscheiden sich beispielsweise durch die Abstände zwischen den einzelnen Personentransportfahrzeugen oder durch die Anordnung in einer Einer-, Zweier- oder Dreierreihe. Beispielsweise fahren die Personentransportfahrzeuge einer Gruppe in der Normal-Anordnung in einer Einer-Reihe mit einem festgelegten Abstand zueinander hintereinander her. Wenn sich die Personentransportfahrzeuge einer Gruppe auf das Passieren eines Hindernisses vorbereiten, können sie beispielsweise den Abstand zueinander verkleinern und/oder von der Einer-Reihe in eine Zweier-Reihe übergehen. Beide Massnahmen führen dazu, dass das Hindernis gegenüber der Normal-Anordnung in einer kürzeren Zeit passiert werden kann. Nach dem Passieren des Hindernisses wird wieder die Normal-Anordnung eingenommen.

Es wird darauf hingewiesen, dass einige der möglichen Merkmale und Vorteile der Erfindung hierin mit Bezug auf unterschiedliche Ausführungsformen des erfindungsgemässen Personentransportsystems einerseits und des erfindungsgemässen Verfahrens andererseits beschrieben sind. Ein Fachmann erkennt, dass die Merkmale in geeigneter Weise kombiniert, angepasst, übertragen oder ausgetauscht werden können, um zu weiteren Ausführungsformen der Erfindung zu gelangen.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Die Zeichnungen sind lediglich schematisch und nicht massstabsgetreu.

Dabei zeigen:
- Fig. 1a: ein Personentransportsystem mit zwei beispielhaft dargestellten Personentransportfahrzeugen und einem Hindernis in Form einer Kreuzung,
- Fig. 1b: ein Weg-Zeit-Diagramm von Fahrten der Personentransportfahrzeuge von jeweils einem Startort zu jeweils einem Zielort,
- Fig. 2a: ein Personentransportsystem mit einem beispielhaft dargestellten Personentransportfahrzeug und einem Hindernis in Form einer Kreuzung mit einer Ampel,
- Fig. 2b: ein Weg-Zeit-Diagramm einer Fahrt der Personentransportfahrzeug von einem Startort zu einem Zielort,
- Fig. 3a: ein Personentransportsystem mit einem beispielhaft dargestellten Personentransportfahrzeug und einem Hindernis in Form einer Höhendifferenz mit einem Aufzug,
- Fig. 3b: ein Weg-Zeit-Diagramm einer Fahrt der Personentransportfahrzeug von einem Startort zu einem Zielort,
- Fig. 4a: ein Personentransportsystem mit einer beispielhaft dargestellten Gruppe von drei Personentransportfahrzeugen und einem Hindernis in Form einer Kreuzung mit einer Ampel,
- Fig. 4b: ein Weg-Zeit-Diagramm von Fahrten der Gruppe der Personentransportfahrzeuge von einem jeweiligen Startort zu einem jeweiligen Zielort.

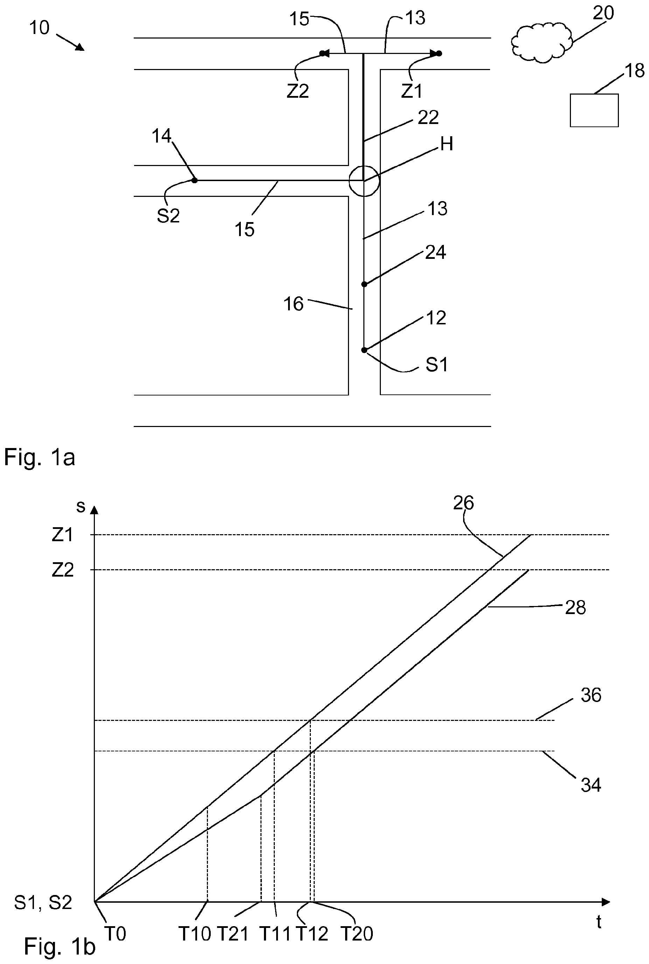

Gemäss Fig. 1a verfügt ein Personentransportsystem 10 über ein erstes Personentransportfahrzeug 12 und zweites Personentransportfahrzeug 14, die grundsätzlich identisch aufgebaut sind. Die Personentransportfahrzeuge 12, 14 sind elektrisch angetrieben und können autonom auf auch von anderen Verkehrsteilnehmern genutzten Transportwegen 16 fahren. Die Personentransportfahrzeuge 12, 14 verfügen über nicht dargestellte Sensoren, mit denen sie ihre Umgebung erfassen können. Sie können so autonom den Transportwegen 16 folgen und automatisiert einen Mindestabstand untereinander und zu anderen Verkehrsteilnehmern einhalten.

Die Transportwege 16 können als Gehwege, Fahrradwege oder Strassen ausgeführt sein. Die Personentransportfahrzeuge 12, 14 können einen Passagier befördern, wozu sie eine nicht dargestellte Standfläche und eine Haltestange aufweisen. Die Personentransportfahrzeuge 12, 14 werden von einer zentralen Steuerungseinrichtung 18 des Personentransportsystems 10 kontrolliert. Dazu steht die zentrale Steuerungseinrichtung 18 mit nicht dargestellten Steuerungseinrichtungen der Personentransportfahrzeuge 12, 14 über das Internet 20 in Kommunikationsverbindung. Im in Fig. 1a dargestellten Beispiel kontrolliert die zentrale Steuerungseinrichtung 18 das erste Personentransportfahrzeug 12 so, dass es von einem ersten Startort S1 zu einem ersten Zielort Z1 fährt und dabei einen nicht dargestellten Passagier transportiert. Das erste Personentransportfahrzeug 12 fährt damit eine Strecke 13 zwischen dem ersten Startort S1 und dem ersten Zielort Z1. Das zweite Personentransportfahrzeug 14 wird so kontrolliert, dass es von einem zweiten Startort S2 zu einem zweiten Zielort Z2 fährt und dabei einen nicht dargestellten Passagier transportiert. Das zweite Personentransportfahrzeug 14 fährt damit eine Strecke 15 zwischen dem zweiten Startort S2 und dem zweiten Zielort Z2. Die beiden Strecken 13, 15 weisen ein gemeinsames Wegstück 22 auf, an dessen Beginn ein Hindernis H in Form einer T-Kreuzung liegt. Das Hindernis H kann gleichzeitig nur von einem Personentransportfahrzeug 12, 14 passiert werden. Das Hindernis H kann für jedes Personentransportfahrzeug 12, 14 einen Passier-Zustand, in dem es von dem jeweiligen Personentransportfahrzeug 12, 14 passiert werden kann, und einen Sperr-Zustand einnehmen, in dem es von dem jeweiligen Personentransportfahrzeug 12, 14 nicht passiert werden kann. Im in Fig. 1a dargestellten Beispiel kann das Hindernis H gleichzeitig nur für eines der beiden Personentransportfahrzeuge 12, 14 den Passier-Zustand haben. Für das andere Personentransportfahrzeug hat es dann den Sperr-Zustand und kann von diesem Personentransportfahrzeug damit nicht passiert werden.

Die zentrale Steuerungseinrichtung 18 plant die Fahrten der beiden Personentransportfahrzeuge 12, 14. Im hier beschriebenen Beispiel räumt die Steuerungseinrichtung 18 dem ersten Personentransportfahrzeug 12 Priorität ein und legt fest, dass dieses das Hindernis H zuerst passieren darf. Da ansonsten keine anderen Personentransportfahrzeuge oder Verkehrsteilnehmer beachten werden müssen, hat das Hindernis bis zum Passieren durch das erste Personentransportfahrzeug 12 den Passier-Zustand für das erste Personentransportfahrzeug 12. Da das Hindernis H nur von einem der beiden Personentransportfahrzeuge 12, 14 passiert werden kann, hat es gleichzeitig den Sperr-Zustand für das zweite Personentransportfahrzeug 14. Nach dem Passieren des Hindernisses H durch das erste Personentransportfahrzeug 12 wechselt der Zustand des Hindernisses H in den Passier-Zustand für das zweite Personentransportfahrzeug 14. Die Abfolge der Zustände des Hindernisses H wird als eine Zustandsfolge bezeichnet, die von der zentralen Steuerungseinrichtung 18 ermittelt wird.

Die zentrale Steuerungseinrichtung 18 kontrolliert die Personentransportfahrzeuge 12, 14, indem sie den Personentransportfahrzeugen eine Ankunftszeit am Hindernis H und optional zusätzlich eine Ankunftszeit an einer Zwischenstation vorgibt. Die Ankunftszeiten ergeben sich aus der beschriebenen Zustandsfolge des Hindernisses H. Die genannten Zeiten und die sich daraus ergebenden Weg-Zeit-Diagramme sind in der Fig. 1b dargestellt. Die Linie 26 zeigt dabei den zurückgelegten Weg über der Zeit für das erste Personentransportfahrzeug 12 und die Linie 28 den zurückgelegten Weg über der Zeit für das zweite Personentransportfahrzeug 14. Die Linie 34 kennzeichnet den Beginn und die Linie 36 das Ende des Hindernisses H. Im hier beschriebenen Beispiel gibt die zentrale Steuerungseinrichtung 18 dem ersten Personentransportfahrzeug 12 eine Ankunftszeit T10 an einem Zwischenstopp 24 (siehe Fig. 1a) und eine Ankunftszeit T11 am Hindernis H vor. Das erste Personentransportfahrzeug 12 legt dann seine Geschwindigkeit so fest, dass es bei einem Start zum Zeitpunkt T0 zu den geforderten Zeitpunkten am Zwischenstopp 24 und am Hindernis H ankommt. Hier kann das sehr einfach erreicht werden, indem das erste Personentransportfahrzeug 12 mit einer konstanten Geschwindigkeit fährt, was zu einer konstanten Steigung der Linie 26 führt. Da gemäss der oben beschriebenen Zustandsfolge das Hindernis H bis zum Passieren durch das erste Personentransportfahrzeug 12 im Passier-Zustand für das erste Personentransportfahrzeug 12 ist, erreicht das erste Personentransportfahrzeug 12 das Hindernis H dann, wenn es sich im Passier-Zustand für das erste Personentransportfahrzeug 12 ist. Das erste Personentransportfahrzeug 12 erreicht damit ausgehend vom ersten Startort S1 das Hindernis H ohne anzuhalten, also zwischenstoppfrei. Nach Passieren des Hindernisses H fährt das erste Personentransportfahrzeug 12 mit konstanter Geschwindigkeit weiter, bis es den ersten Zielpunkt Z1 erreicht und anhält. Damit hat der Passagier des ersten Personentransportfahrzeug 12 sein Ziel erreicht und kann vom ersten Personentransportfahrzeug 12 absteigen.

Dem zweiten Personentransportfahrzeug 14 wird nur eine Ankunftszeit T20 am Hindernis H vorgegeben. Die Ankunftszeit T20 wird dabei so gewählt, dass sie kurz nach dem Zeitpunkt T12 liegt, an dem das erste Personentransportfahrzeug 12 das Hindernis H passiert hat. Der Zeitpunkt T12 wird beispielsweise ausgehend von der Ankunftszeit T11 des ersten Personentransportfahrzeug 12 am Hindernis H, einer Normalgeschwindigkeit des ersten Personentransportfahrzeug 12 beim Passieren von Hindernissen und der Länge der zum Passieren des Hindernisses H notwendigen Strecke bestimmt. Nach einem Start ebenfalls zum Zeitpunkt T0 fährt das zweite Personentransportfahrzeug 14 bis zum Zeitpunkt T21 mit einer geringeren Geschwindigkeit als das erste Personentransportfahrzeug 12. Ab dem Zeitpunkt T21 fährt es dann mit der selben Geschwindigkeit wie das erste Personentransportfahrzeug 12 und erreicht so zum vorgegebenen Zeitpunkt T20 das Hindernis H. Da gemäss der oben beschriebenen Zustandsfolge das Hindernis H nach dem Passieren durch das erste Personentransportfahrzeug 12 im Passier-Zustand für das zweite Personentransportfahrzeug 14 ist, erreicht das zweite Personentransportfahrzeug 14 das Hindernis H dann, wenn es sich im Passier-Zustand für das zweite Personentransportfahrzeug 14 ist. Das zweite Personentransportfahrzeug 14 erreicht damit ausgehend vom zweiten Startort S2 das Hindernis H ohne anzuhalten, also zwischenstoppfrei. Nach Erreichen und dem anschliessenden Passieren des Hindernisses H fährt das zweite Personentransportfahrzeug 14 mit konstanter Geschwindigkeit weiter, bis es den zweiten Zielpunkt Z2 erreicht und anhält. Damit hat der Passagier des zweiten Personentransportfahrzeug 14 sein Ziel erreicht und kann vom ersten Personentransportfahrzeug 14 absteigen.

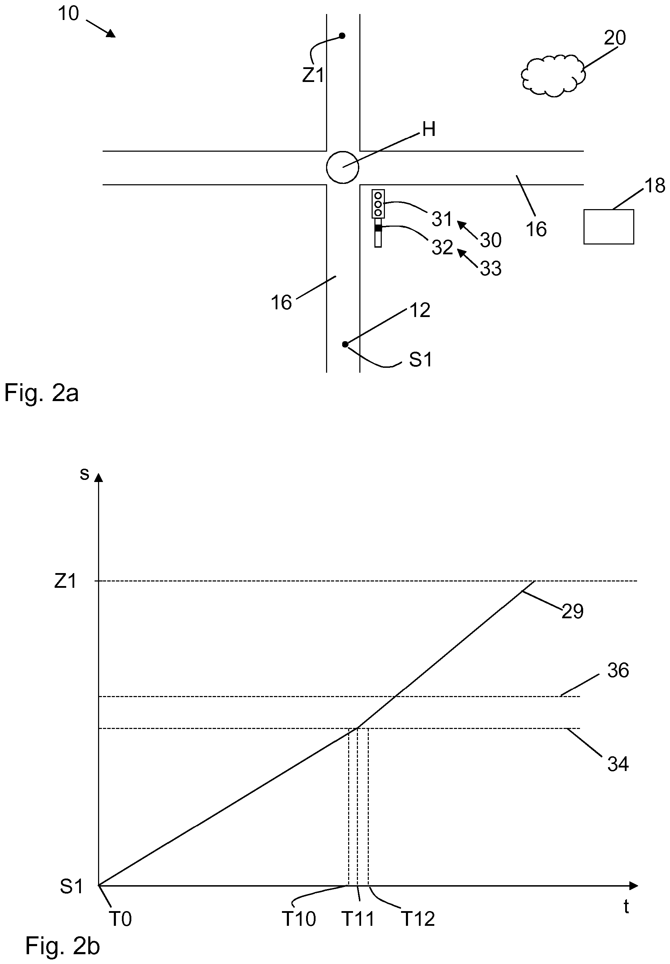

Das in Fig. 2a dargestellte Personentransportsystem 10 ist sehr ähnlich wie das Personentransportsystem in Fig. 1a aufgebaut, weshalb hauptsächlich auf die Unterschiede der beiden Personentransportsysteme eingegangen wird.

Beim Personentransportsysteme 10 gemäss Fig. 2a, soll ebenfalls ein erstes Personentransportfahrzeug 12 von einem ersten Startort S1 zu einem ersten Zielort Z1 fahren und dabei einen nicht dargestellten Passagier transportieren. Das erste Personentransportfahrzeug 12 muss dabei ein Hindernis H in Form einer Kreuzung von zwei sich senkrecht kreuzenden Transportwegen 16 passieren. Das Hindernis H weist ein Hilfsmittel 30 zum Passieren des Hindernisses in Form einer Ampel 31 auf, die von einer dezentralen Steuerungseinrichtung 33 in Form einer Ampelsteuerung 32 angesteuert wird. Die Ampelsteuerung 32 bestimmt, wann die Ampel 31 für welche Fahrtrichtung grün ist, also das Passieren der Kreuzung und damit des Hindernisses H erlaubt. Die Ampelsteuerung 32 legt dies für eine gewisse Zeit im Voraus fest und bestimmt somit eine Zustandsfolge des Hindernisses H. Die Ampelsteuerung 32 übermittelt die Zustandsfolge des Hindernisses H über das Internet 20 an die zentrale Steuerungseinrichtung 18. Die zentrale Steuerungseinrichtung 18 kann die Zustandsfolge des Hindernisses H beeinflussen, indem sie eine Anforderung für das Passieren des Hindernisses durch das erste Personentransportfahrzeug 12 an die Ampelsteuerung 32 übermittelt. Dazu übermittelt sie der Ampelsteuerung 32 zum einen die Information, von welcher Seite des Hindernisses H das erste Personentransportfahrzeug 12 am Hindernis H ankommt und in welche Richtung es das Hindernis H verlassen möchte. Ausserdem übermittelt sie der Ampelsteuerung 32 einen frühest möglichen Zeitpunkt, an dem das erste Personentransportfahrzeug 12 am Hindernis H ankommen kann. Die Ampelsteuerung 32 berücksichtigt diese Informationen bei der Festlegung der Zustandsfolge des Hindernisses H.

Wie beschrieben übermittelt die Ampelsteuerung 32 die Zustandsfolge des Hindernisses H an die zentrale Steuerungseinrichtung 18. Daraus ermittelt die zentrale Steuerungseinrichtung 18 die Zustandsfolge des Hindernisses H für das erste Personentransportfahrzeug 12. Aus der Information von der Ampelsteuerung 32, zu welchem Zeitpunkt das Hindernis H in Fahrtrichtung des ersten Personentransportfahrzeugs 12 passierbar ist, leitet die zentrale Steuerungseinrichtung 18 ab, dass bis zu diesem Zeitpunkt das Hindernis H im Sperr-Zustand für das erste Personentransportfahrzeug 12 ist. Dieser Zeitpunkt ist in Fig. 2b als T10 bezeichnet. Zum Zeitpunkt T10 wechselt der Zustand des Hindernisses H in den Passier-Zustand für das erste Personentransportfahrzeug 12. Aus der Information von der Ampelsteuerung 32, zu welchem Zeitpunkt (T12 in Fig. 2b) das Hindernis H in Fahrtrichtung des ersten Personentransportfahrzeugs 12 nicht mehr passierbar ist, leitet die zentrale Steuerungseinrichtung 18 ab, dass ab dem Zeitpunkt T10 bis zu Zeitpunkt T12 das Hindernis H im Passier-Zustand für das erste Personentransportfahrzeug 12 ist. Zum Zeitpunkt T12 wechselt der Zustand des Hindernisses H wieder zurück in den Sperr-Zustand für das erste Personentransportfahrzeug 12.

Auf Basis der wie beschrieben ermittelten Zustandsfolge des Hindernisses H für das erste Personentransportfahrzeug kontrolliert die zentrale Steuerungseinrichtung 18 die Fahrt des ersten Personentransportfahrzeugs 12 vom ersten Startort S1 zum ersten Zielort Z1. Dazu gibt die zentrale Steuerungseinrichtung 18 dem ersten Personentransportfahrzeug 12 den kurz nach dem Zeitpunkt T10 liegenden Zeitpunkt T11 als Ankunftszeit am Hindernis H vor. Die Steuerungseinrichtung des Personentransportfahrzeugs 12 startet das erste Personentransportfahrzeug 12 zum Zeitpunkt T0 mit einer Geschwindigkeit, mit der das erste Personentransportfahrzeug 12 zum zwischen den Zeitpunkten T10 und T12 liegenden Zeitpunkt T11 am Hindernis H ankommt. Wie beschrieben befindet sich das Hindernis H zum Zeitpunkt T11 im Passier-Zustand für das erste Personentransportfahrzeug 12, so dass dieses ohne anzuhalten das Hindernis H passieren kann. Ab dem Zeitpunkt T11 fährt das erste Personentransportfahrzeug 12 mit einer höheren Geschwindigkeit bis es den ersten Zielpunkt Z1 erreicht. Der Verlauf des zurückgelegten Wegs des ersten Personentransportfahrzeugs 12 über der Zeit ist in Fig. 2b mit der Linie 29 dargestellt. Ausserdem kennzeichnen die Linie 34 den Beginn und die Linie 36 das Ende des Hindernisses H.

Wäre das erste Personentransportfahrzeug 12 bereits vor dem Erreichen des Hindernisses H mit dieser höheren Geschwindigkeit gefahren, so hätte es das Hindernis H vor dem Zeitpunkt T10 erreicht, also im Sperr-Zustand des Hindernisses H für das erste Personentransportfahrzeug 12. Das erste Personentransportfahrzeug 12 hätte damit warten müssen, bevor es das Hindernis H passieren kann.

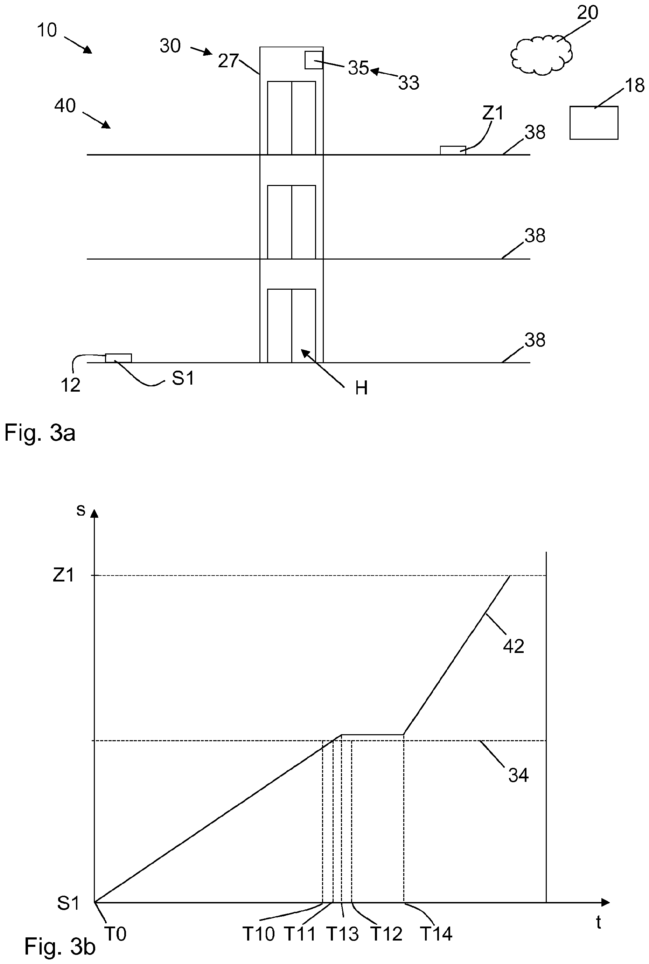

Das in Fig. 3a dargestellte Personentransportsystem 10 ist sehr ähnlich wie das Personentransportsystem in Fig. 2a aufgebaut, weshalb hauptsächlich auf die Unterschiede der beiden Personentransportsysteme eingegangen wird.

Beim Personentransportsysteme 10 gemäss Fig. 3a, soll ebenfalls ein erstes Personentransportfahrzeug 12 von einem ersten Startort S1 zu einem ersten Zielort Z1 fahren und dabei einen nicht dargestellten Passagier transportieren. Der Unterschied zwischen dem Personentransportsystem 10 gemäss Fig. 3a und dem Personentransportsystem 10 gemäss Fig. 2a besteht hauptsächlich darin, dass das zu passierende Hindernis H in der Fig. 3a als eine Höhendifferenz zwischen Stockwerken 38 eines Gebäudes 40 ausgeführt ist, das mit einem Hilfsmittel 30 in Form eines Aufzugs 27 passiert werden kann. Das Hindernis H ist im Passier-Zustand für das erste Personentransportfahrzeug 12, wenn eine nicht dargestellte Aufzugkabine des Aufzugs 27 für das Personentransportfahrzeug 12 bereitsteht, das Personentransportfahrzeug 12 also in die Aufzugkabine einfahren und von ihr auf das gewünschte Stockwerk 38 gebracht werden kann.

Der Aufzug 27 wird von einer dezentralen Steuerungseinrichtung 33 in Form einer Aufzugsteuerung 35 angesteuert, die über das Internet 20 mit der zentralen Steuerungseinrichtung 18 in Kommunikationsverbindung steht. Die zentrale Steuerungseinrichtung 18 kann eine Anforderung für die Bereitstellung der Aufzugkabine für das erste Personentransportfahrzeug 12 zusammen mit der Angabe des Startstockwerks 28 und des Zielstockwerks 38, auf dem sich der Zielort Z1 befindet an die Aufzugsteuerung 35 übermitteln. Die Aufzugsteuerung 35 ermittelt damit und zusammen mit anderen Anforderungen eine Zustandsfolge des Aufzugs 27, welche an die zentrale Steuerungseinrichtung 18 übermittelt wird.

Daraus ermittelt die zentrale Steuerungseinrichtung 18 die Zustandsfolge des Hindernisses H für das erste Personentransportfahrzeug 12. Aus der Information von der Aufzugteuerung 35, zu welchem Zeitpunkt die Aufzugkabine für das erste Personentransportfahrzeug 12 bereitsteht, das Hindernis H damit für das erste Personentransportfahrzeug 12 passierbar ist, leitet die zentrale Steuerungseinrichtung 18 ab, dass bis zu diesem Zeitpunkt das Hindernis H im Sperr-Zustand für das erste Personentransportfahrzeug 12 ist. Dieser Zeitpunkt ist in Fig. 3b als T10 bezeichnet. Zum Zeitpunkt T10 wechselt der Zustand des Hindernisses H in den Passier-Zustand für das erste Personentransportfahrzeug 12. Aus der Information von der Aufzugsteuerung 35, zu welchem Zeitpunkt (T12 in Fig. 2b) die Aufzugkabine nicht mehr für das erste Personentransportfahrzeug 12 bereitsteht, das Hindernis H für das erste Personentransportfahrzeug 12 damit nicht mehr passierbar ist, leitet die zentrale Steuerungseinrichtung 18 ab, dass ab dem Zeitpunkt T10 bis zu Zeitpunkt T12 das Hindernis H im Passier-Zustand für das erste Personentransportfahrzeug 12 ist. Zum Zeitpunkt T12 wechselt der Zustand des Hindernisses H wieder zurück in den Sperr-Zustand für das erste Personentransportfahrzeug 12.

Auf Basis der wie beschrieben ermittelten Zustandsfolge des Hindernisses H für das erste Personentransportfahrzeug 12 kontrolliert die zentrale Steuerungseinrichtung 18 die Fahrt des ersten Personentransportfahrzeugs 12 vom ersten Startort S1 zum ersten Zielort Z1, deren Weg-Zeit Diagramm in Fig, 3b dargestellt ist. Dazu gibt die zentrale Steuerungseinrichtung 18 dem ersten Personentransportfahrzeug 12 den kurz nach dem Zeitpunkt T10 liegenden Zeitpunkt T11 als Ankunftszeit am Hindernis H, also an der Aufzugkabine vor. Die Steuerungseinrichtung des ersten Personentransportfahrzeugs 12 startet das erste Personentransportfahrzeug 12 zum Zeitpunkt T0 mit einer Geschwindigkeit, mit der das erste Personentransportfahrzeug 12 zum Zeitpunkt T11 am Hindernis H ankommt. Wie beschrieben steht zu diesem Zeitpunkt die Aufzugkabine für das erste Personentransportfahrzeug 12 bereit, das Hindernis H befindet sich damit zum Zeitpunkt T11 im Passier-Zustand für das erste Personentransportfahrzeug 12, so dass dieses ohne anzuhalten in die Aufzugkabine fahren kann. Zum Zeitpunkt T13 ist das erste Personentransportfahrzeug 12 in die Aufzugkabine eingefahren und hält in der Aufzugkabine an. Anschliessend fährt die Aufzugkabine zusammen mit dem ersten Personentransportfahrzeug 12 auf das Stockwerk 38, auf dem sich der Zielort Z1 befindet. Sie kommen zum Zeitpunkt T14 am genannten Stockwerk 14 an. Da während der Fahrt in das genannte Stockwerk kein Weg in der Ebene zurückgelegt wird, verläuft die Linie 42, welche den Weg des ersten Personentransportfahrzeugs 12 über der Zeit darstellt, zwischen den Zeitpunkten T13 und T14 waagrecht. Ab dem Zeitpunkt T14 verlässt das erste Personentransportfahrzeug 12 die Aufzugkabine und fährt dann mit einer höheren Geschwindigkeit bis es den ersten Zielpunkt Z1 erreicht. In Fig. 3b kennzeichnet die Linie 34 den Beginn des Hindernisses H.

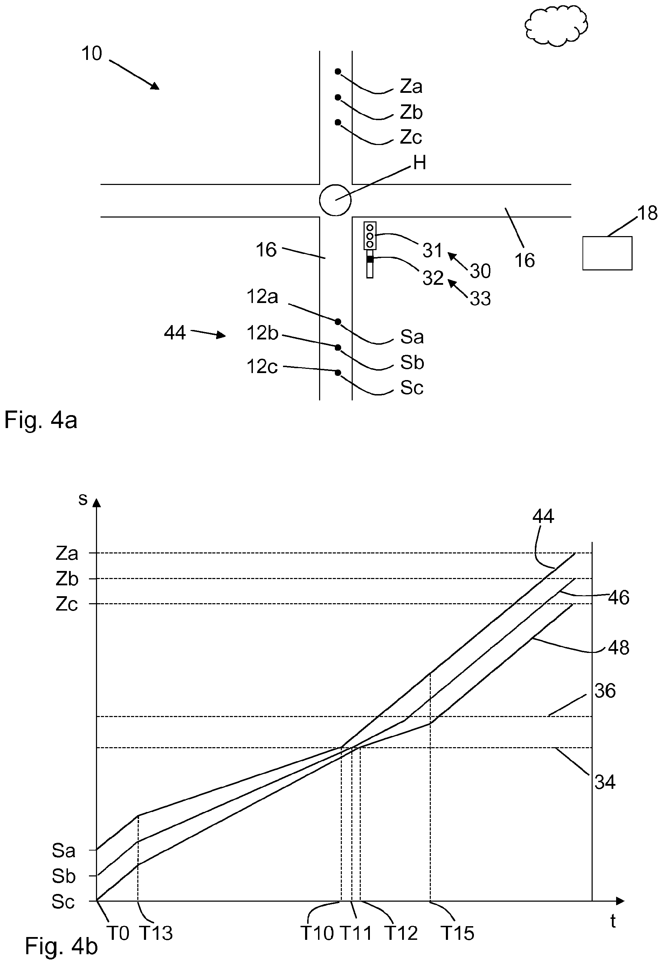

Beim Personentransportsystem 10 gemäss Fig. 4a kontrolliert die zentrale Steuerungseinrichtung 18 eine aus drei Personentransportfahrzeugen 12a, 12b, 12c bestehende Gruppe 44. Die Personentransportfahrzeuge 12a, 12b, 12c fahren von einem jeweiligen Startort Sa, Sb, Sc zu einem jeweiligen Zielort Za, Zb, Zc wobei sie ein Hindernis H in Form einer Kreuzung von zwei sich senkrecht kreuzenden Transportwegen 16 passieren. Die Startorte Sa, Sb, Sc, sowie die Zielorte Za, Zb, Zc sind jeweils hintereinander in einem gleichen Abstand zueinander angeordnet. Die Anordnung der Personentransportfahrzeuge 12a, 12b, 12c an den Startorten Sa, Sb, Sc und den Zielorten Za, Zb, Zc entspricht einer Normal-Anordnung der Personentransportfahrzeuge 12a, 12b, 12c der Gruppe 44. Sofern möglich, also insbesondere unbeeinflusst durch ein Hindernis nehmen die Personentransportfahrzeug 12a, 12b, 12c diese Normal-Anordnung ein.

Das Hindernis H weist ein Hilfsmittel 30 zum Passieren des Hindernisses in Form einer Ampel 31 auf, die von einer dezentralen Steuerungseinrichtung 33 in Form einer Ampelsteuerung 32 angesteuert wird. Das Zusammenspiel zwischen der Ampelsteuerung 32 und der zentralen Steuerungseinrichtung 18 läuft wie bei beim Personentransportsystem 10 gemäss Fig. 2a. Die zentrale Steuerungseinrichtung 18 ermittelt damit eine Zustandsfolge des Hindernisses H für die Personentransportfahrzeuge 12a, 12b, 12c. Aus der Information von der Ampelsteuerung 32, zu welchem Zeitpunkt das Hindernis H in Fahrtrichtung der Personentransportfahrzeuge 12a, 12b, 12c passierbar ist, leitet die zentrale Steuerungseinrichtung 18 ab, dass bis zu diesem Zeitpunkt das Hindernis H im Sperr-Zustand für die Personentransportfahrzeuge 12a, 12b, 12c ist. Dieser Zeitpunkt ist in Fig. 4b als T10 bezeichnet. Zum Zeitpunkt T10 wechselt der Zustand des Hindernisses H in den Passier-Zustand für die Personentransportfahrzeuge 12a, 12b, 12c. Aus der Information von der Ampelsteuerung 32, zu welchem Zeitpunkt (T12 in Fig. 4b) das Hindernis H in Fahrtrichtung der Personentransportfahrzeuge 12a, 12b, 12c nicht mehr passierbar ist, leitet die zentrale Steuerungseinrichtung 18 ab, dass ab dem Zeitpunkt T10 bis zu Zeitpunkt T12 das Hindernis H im Passier-Zustand für die Personentransportfahrzeuge 12a, 12b, 12c ist. Zum Zeitpunkt T12 wechselt der Zustand des Hindernisses H wieder zurück in den Sperr-Zustand für die Personentransportfahrzeuge 12a, 12b, 12c.

Auf Basis der wie beschrieben ermittelten Zustandsfolge des Hindernisses H für die Personentransportfahrzeuge 12a, 12b, 12c kontrolliert die zentrale Steuerungseinrichtung 18 die Fahrten der Personentransportfahrzeuge 12a, 12b, 12c der Gruppe 44 von den jeweiligen Startorten Sa, Sb, Sc zu den jeweiligen Zielorten Za, Zb, Zc so, dass die Gruppe 44 das Hindernis H gemeinsam passieren kann. Die zugehörigen Weg-Zeit Diagramme sind in Fig, 4b dargestellt (Linie 44 für Personentransportfahrzeug 12a, Linie 46 für Personentransportfahrzeug 12b und Linie 48 für Personentransportfahrzeug 12c). In Fig. 4b kennzeichnen ausserdem die Linie 34 den Beginn und die Linie 36 das Ende des Hindernisses H.

Zu Kontrolle der Personentransportfahrzeuge 12a, 12b, 12c gibt die zentrale Steuerungseinrichtung 18 dem ersten Personentransportfahrzeug 12a den Zeitpunkt T10, dem dritten und letzten Personentransportfahrzeuge 12c den Zeitpunkt T12 und dem zweiten und mittleren Personentransportfahrzeug 12b den zwischen den Zeitpunkte T10 und T12 liegenden Zeitpunkt T11 als Ankunftszeiten am Hindernis H vor. Die Steuerungseinrichtungen der Personentransportfahrzeuge 12a, 12b, 12c starten die Personentransportfahrzeuge 12a, 12b, 12c zum Zeitpunkt T0 mit jeweils der gleichen Geschwindigkeit, so dass sie zunächst in der Normal-Anordnung bleiben. Das ist möglich, da sie zunächst noch unbeeinflusst vom Hindernis H sind. Dies ändert sich zum Zeitpunkt T13, ab dem die Personentransportfahrzeuge 12a, 12b, 12c ihre Geschwindigkeit so anpassen, dass sie zu ihren jeweiligen Ankunftszeiten am Hindernis H ankommen. Damit verringert sich der Abstand zwischen den Personentransportfahrzeugen 12a, 12b, 12c, womit sie eine von der Normal-Anordnung abweichende Anordnung einnehmen. Die Personentransportfahrzeuge 12a, 12b, 12c kommen damit alle am Hindernis H an, wenn dieses im Passier-Zustand für sie ist, so dass sie dieses ohne anzuhalten als Gruppe passieren können. Schon während des Passierens des Hindernisses H passen die Personentransportfahrzeuge 12a, 12b, 12c ihre Geschwindigkeit so an, dass sie wieder in die Normal-Anordnung kommen, was zum Zeitpunkt T15 erreicht ist. Sie fahren dann mit der selben Geschwindigkeit wie zu Beginn bis zu ihren jeweiligen Zielorten Za, Zb, Zc.

Da die Personentransportfahrzeuge 12a, 12b, 12c vom Zeitpunkt T0 bis zum Zeitpunkt T13 und vom Zeitpunkt T15 bis zum Erreichen ihrer jeweiligen Zielorte Za, Zb, Zc vom Hindernis unbeeinflusst sind, nehmen sie in den genannten Zeitspannen die Normal-Anordnung ein. Zwischen den Zeitpunkten T13 und dem Zeitpunkt T15, also kurz vor, während und kurz nach dem Passieren des Hindernisses sind sie vom Hindernis H beeinflusst und nehmen deshalb eine von der Normal-Anordnung abweichende Anordnung ein.

Zusätzlich oder alternativ zur Verringerung des Abstands zwischen den Personentransportfahrzeugen 12a, 12b, 12c der Gruppe 44 könnten die Personentransportfahrzeuge 12a, 12b, 12c auch ausgehend von der Normal-Anordnung in eine Zweier-Reihe übergehen und so eine von der Normal-Anordnung abweichende Anordnung einnehmen.

Alternativ zur Vorgabe von Ankunftszeiten am Hindernis und optional zusätzlich an Zwischenpunkten kann die zentrale Steuerungseinrichtung die Personentransportfahrzeuge der beschriebenen Personentransportsysteme kontrollieren, indem sie den einzelnen Personentransportfahrzeugen jeweils eine Soll-Geschwindigkeit entlang ihrer Fahrtroute von ihrem jeweiligen Startort zu ihrem Zielort vorgibt.

Abschliessend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Personentransportsystem mit
mehreren Personentransportfahrzeugen (12, 14, 12a, 12b, 12c) und einer zentralen Steuerungseinrichtung (18), wobei die Personentransportfahrzeuge (12, 14, 12a, 12b, 12c) dazu vorgesehen sind, kontrolliert durch die zentrale Steuerungseinrichtung (18) auf von unterschiedlichen Arten von Verkehrsteilnehmern genutzten Transportwegen (16) autonom zu fahren,
**dadurch gekennzeichnet, dass**
die zentrale Steuerungseinrichtung (18) dazu vorgesehen ist, ein erstes Personentransportfahrzeug (12, 12a), welches auf einer Fahrt von einem ersten Startort (S1, Sa) zu einem ersten Zielort (Z1, Za) ein Hindernis (H) passieren muss, so zu kontrollieren, dass das erste Personentransportfahrzeug (12, 12a) das Hindernis (H) dann erreicht, wenn das Hindernis (H) für das erste Transportfahrzeug (12, 12a) passierbar ist, sich also für das erste Personentransportfahrzeug (12, 12a) in einem Passier-Zustand befindet.

2. Personentransportsystem nach Anspruch 1,
**dadurch gekennzeichnet, dass**
die zentrale Steuerungseinrichtung (18) dazu vorgesehen ist, das erste Personentransportfahrzeug (12, 12a) zu kontrollieren, indem sie dem ersten Personentransportfahrzeug (12, 12a) eine Fahrtroute und eine Soll-Geschwindigkeit entlang der Fahrtroute vorgibt.

3. Personentransportsystem nach Anspruch 1,
**dadurch gekennzeichnet, dass**
die zentrale Steuerungseinrichtung (18) dazu vorgesehen ist, das erste Personentransportfahrzeug (12, 12a) zu kontrollieren, indem sie dem ersten Personentransportfahrzeug (12, 12a) eine Ankunftszeit am Hindernis (H) und optional zusätzlich eine Ankunftszeit an einer Zwischenstation (24) vorgibt.

4. Personentransportsystem nach Anspruch 1, 2 oder 3,
**dadurch gekennzeichnet, dass**
die zentrale Steuerungseinrichtung (18) dazu vorgesehen ist, das erste Personentransportfahrzeug (12, 12a) so zu kontrollieren, dass es das Hindernis (H) ohne anzuhalten erreicht.

5. Personentransportsystem nach einem der Ansprüche 1 bis 4,
**dadurch gekennzeichnet, dass**
- das Hindernis (H) neben dem Passier-Zustand für das erste Personentransportfahrzeug (12, 12a) einen Sperr-Zustand für das erste Personentransportfahrzeug (12, 12a) einnehmen kann, in welchem es vom ersten Personentransportfahrzeug (12, 12a) nicht passiert werden kann, und
- die zentrale Steuerungseinrichtung (18) dazu vorgesehen ist, eine Zustandsfolge des Hindernisses (H) zu ermitteln und das erste Personentransportfahrzeug (12, 12a) in Abhängigkeit der genannten Zustandsfolge zu kontrollieren.

6. Personentransportsystem nach Anspruch 5,
**dadurch gekennzeichnet, dass**
- das Hindernis (H) ein Hilfsmittel (30) zum Passieren des Hindernisses (H) aufweist, welches von einer dezentralen Steuerungseinrichtung (33) angesteuert wird und
- die genannte dezentrale Steuerungseinrichtung (33) dazu vorgesehen ist, eine Zustandsfolge des Hindernisses (H) zu bestimmen und die Zustandsfolge an die zentrale Steuerungseinrichtung (18) zu übermitteln.

7. Personentransportsystem nach Anspruch 6,
**dadurch gekennzeichnet, dass**
- die zentrale Steuerungseinrichtung (18) dazu vorgesehen ist, eine Anforderung an das Hilfsmittel (30) zum Passieren des Hindernisses (H) durch das erste Personentransportfahrzeug (12, 12a) an die dezentrale Steuerungseinrichtung (18) zu übermitteln und
- die dezentrale Steuerungseinrichtung (33) dazu vorgesehen ist, die genannte Zustandsfolge des Hindernisses (H) in Abhängigkeit der genannten Anforderung zu bestimmen.

8. Personentransportsystem nach einem der Ansprüche 1 bis 7,
**dadurch gekennzeichnet, dass**
die zentrale Steuerungseinrichtung (18) dazu vorgesehen ist, ein zweites Personentransportfahrzeug (14, 12b, 12c), welches auf einer Fahrt von einem zweiten Startort (S2, Sb, Sc) zu einem zweiten Zielort (Z2, Zb, Zc) das genannte Hindernis (H) passieren muss, so zu kontrollieren, dass das erste Personentransportfahrzeug (12, 12a) und das zweite Personentransportfahrzeug (14, 12b, 12c) das Hindernis (H) dann erreichen, wenn das Hindernis für das erste Personentransportfahrzeug (12, 12a) und das zweite Personentransportfahrzeug (14, 12b, 12c) in einem Passier-Zustand für das jeweilige Personentransportfahrzeug (12, 14, 12a, 12b, 12c) und damit passierbar ist.

9. Personentransportsystem nach einem der Ansprüche 1 bis 8,
**dadurch gekennzeichnet, dass**
wenigstens zwei Personentransportfahrzeuge (12a, 12b, 12c) zumindest zeitweise eine Gruppe (44) bilden und die zentrale Steuerungseinrichtung (18) dazu vorgesehen ist, die Personentransportfahrzeuge (12a, 12b, 12c) der genannten Gruppe (44) so zu kontrollieren, dass alle Personentransportfahrzeuge (12a, 12b, 12c) der Gruppe (44) das Hindernis (H) als Gruppe passieren.

10. Personentransportsystem nach Anspruch 9,
**dadurch gekennzeichnet, dass**
die zentrale Steuerungseinrichtung (18) dazu vorgesehen ist, die Personentransportfahrzeuge (12a, 12b, 12c) der Gruppe (44) so zu kontrollieren, dass
- sie eine Normal-Anordnung einnehmen, wenn sie unbeeinflusst von einem Hindernis (H) sind und
- sie eine von der Normal-Anordnung abweichende Anordnung einnehmen, wenn sie von einem Hindernis (H) beeinflusst sind.

11. Verfahren zum Betreiben eines Personentransportsystems mit mehreren Personentransportfahrzeugen (12, 14, 12a, 12b, 12c) und einer zentralen Steuerungseinrichtung (18), wobei
die Personentransportfahrzeuge (12, 14, 12a, 12b, 12c) kontrolliert durch die zentrale Steuerungseinrichtung (18) auf von unterschiedlichen Arten von Verkehrsteilnehmern genutzten Transportwegen (16) autonom fahren,
**dadurch gekennzeichnet, dass**
die zentrale Steuerungseinrichtung (18) ein erstes Personentransportfahrzeug (12, 12a), welches auf einer Fahrt von einem ersten Startort (S1, Sa) zu einem ersten Zielort (Z1, Za) ein Hindernis (H) passieren muss, so kontrolliert, dass das erste Personentransportfahrzeug (12, 12a) das Hindernis (H) dann erreicht, wenn das Hindernis (H) für das erste Transportfahrzeug (12, 12a) in einem Passier-Zustand und damit für das erste Personentransportfahrzeug (12, 12a) passierbar ist.
